# EUROPEAN PATENT SPECIFICATION

(11) **EP 3 481 759 B1**
(45) Date of publication and mention of the grant of the patent: **23.02.2022**
(21) Application number: 17824642.7
(22) Date of filing: 07.07.2017
(51) Int. Cl.: B65H 3/32, B65G 47/29, B65G 47/88, B65G 47/08

(54) **CARTON STACK DIVIDER AND A METHOD FOR DIVIDING A PACK OF FLAT-FOLDED CARTONS**
KARTONSTAPELTEILER UND VERFAHREN ZUR TEILUNG EINES STAPELS VON FLACH GEFALTETEN KARTONS
SÉPARATEUR DE PILES DE CARTON ET PROCÉDÉ DE DIVISION D'UN PAQUET DE CARTONS PLIÉS À PLAT

(30) Priority: 08.07.2016 SE 1651020
(43) Date of publication of application: 15.05.2019
(73) Proprietor: NORDEN MACHINERY AB, 391 28 Kalmar (SE)
(72) Inventor: FRIDOLFSSON, Per, 393 51 Kalmar (SE); JOHNSSON, Peter, 388 92 Ljungbyholm (SE)
(74) Representative: Zacco Sweden AB
(86) International application number: PCT/SE2017/050767
(87) International publication number: WO 2018/009141

(56) References cited:
- US-A- 2 954 881
- US-A- 3 127 029
- US-A- 3 826 348
- US-A- 3 826 348
- US-A- 5 095 684
- US-A1- 2006 051 195
- US-A1- 2006 051 195
- US-A1- 2010 104 413
- US-A1- 2012 021 887

## Description

### TECHNICAL FIELD

The present invention relates to a divider adapted to divide a pack of flat-folded cartons or carton blanks. The pack of flat-folded cartons may have a predefined size or may be a pack having a continuous feed of flat-folded cartons. The divider is to be used in the packing industry.

### BACKGROUND ART

When articles are being packaged, it is often desirable to pack them either alone or together in separate packages. Thus, in highly automated packaging facilities, such articles may be transferred to cartons which are to serve as packaging for the article. These cartons are erected to form a final carton from flat-folded cartons prior to the packaging of the article in the carton. The flat-folded cartons are fed from a pick-up magazine to a conveyor by a feeding device. The feeding device picks up a flat-folded carton from the magazine, erects the carton and positions it in the conveyor. A flat-folded carton is made from a carton blank that is glued together at a side portion, such that the side walls of the carton are connected to each other.

A flat-folded carton can be erected in several different manners, and one of them involve picking up a flat-folded carton from a magazine above the feeding device and subsequently placing the erected carton in a position in a conveyor, where it in a subsequent position will receive the article. To reduce pressure on the lowermost flat-folded cartons, and to reduce the size of the feeding device, it is desirable to use magazines that do not hold too many flat-folded cartons.

The flat-folded cartons are loaded into these magazines in groups, comprising a number of flat-folded cartons. Such a group may consist of around 50 to 100 flat-folded cartons, such that there is always a flat-folded carton buffer in the magazine. Preferably, there are always a number of flat-folded cartons in the magazine in order to stabilize the stack of flat-folded cartons. At the same time, the number of flat-folded cartons in the magazine may not be too high, since the flat-folded cartons are not completely flat-folded and the stack of flat-folded cartons may twist and displace in the magazine. The loading of flat-folded cartons may be done by hand but it is often preferred to automate this process. Thus, a loading machine will be used to load flat-folded cartons into the magazine. However, the flat-folded cartons are often delivered stacked next to each other in a manner most suitable for the economy of the transport of the flat-folded cartons. The flat-folded cartons may be placed onto carriers for transport to the magazine loading machine, also in a manner which is most efficient for the loading process. Thus the amount of stacked flat-folded cartons arriving at the loading station may not be the optimal amount of flat-folded cartons to be fed to the magazines or to be handled by the loading machine. The flat-folded cartons may also be fed in a continuous manner towards the magazine of the loading machine or directly to the feeder device.

Since the amount of flat-folded cartons that arrive at the loading station may be more than what can be loaded into the magazine in one loading action, or that is optimal to handle, it is therefore desirable to divide the pack of flat-folded cartons into at least one appropriately sized stack to be loaded into the magazine. It is also possible to feed flat-folded cartons to a loading station continuously, in which case it may also be desirable to divide the continuous flow of flat-folded cartons into stacks of flat-folded cartons.

US 2012/021887 A discloses one solution for separating a portion from a continuous stream of sheet products which allows them to be fed out onto an oscillating support. Once the support has been sufficiently filled with sheet products, the support oscillates downwards towards a conveyor below, which carries the separated sheet products away as a stack. As the portion begins to separate from the stream of products, a front retaining element is lowered to ensure that the remaining sheet products do not fall. The separated stack may travel further to its next destination.

US 3826348 A discloses an article separation apparatus for selecting and separating flat-folded cartons. The apparatus comprises article selection means which bears on and moves over the edge of each article, which creates a slight depression of each article, opening up a small gap between the depressed article and the one preceding it. Once the apparatus decides that enough articles have passed the selection means, a separator or knife presses down on the article selection means and enters between the selected article and the one preceding it, allowing for the stack to be separated.

DE 4208450 A1 discloses a device for moving a complete stack of folded boxes reliably from a magazine to a packing machine, where the folded boxes are delivered stacked in the magazine. Two linearly displaceable gripper arms of a gripper enter the magazine in cavities on opposing sides of the stack of boxes, and press the boxes together. The boxes may then be lifted up and out of the magazine, as they are held together by the pressure exerted by the gripper arms. The stack of boxes can then be moved into a suitable position or can be transferred to a conveyor belt.

US 2006051195 A1 discloses a separation tool which is adapted to separate a horizontal pile of recipients into sub-piles of recipients, where one recipient of each sub-pile have been previously marked with ultra-violet detectable ink. The tool comprises a fixed finger assembly having a pointed edge for holding the recipients upstream from the last recipient of the current sub-pile and a separation finger having a pointed edge for creating a gap between the held recipients and those from the current sub-pile. The gap is created by pulling the pile of recipients apart with the separating finger.

While these solutions work well in certain situations, there is still room for improvements in order to achieve a unit which allows for separation of a stack of flat-folded cartons from the remaining pack of flat-folded cartons and preparing them to be transferred to a magazine.

### DISCLOSURE OF INVENTION

An object of the invention is to provide an improved divider for dividing a pack of objects, such as e.g. flat-folded cartons or carton blanks. A further object of the invention is to provide an improved method for dividing a pack of flat-folded cartons or carton blanks.

The solution to the problem according to the invention is described in the characterizing part of claim 1 regarding the divider and in claim 11 regarding the method. The other claims contain advantageous further developments of the divider.

In a divider for dividing a pack of flat-folded cartons into a first stack and a second stack of flat-folded cartons, where the divider comprises a parting device and a parting tip, where the parting tip is arranged in a parting plane, the object of the invention is achieved in that the parting tip is adapted to bear on top of the carton pack before the carton pack is divided and to hold the second stack when the carton pack has been divided, that the parting device is adapted to divide the carton pack along the parting plane by displacing a front section of the parting device from a rear section of the parting device, such that the first stack is held by the front section and that the second stack is held by the parting tip.

By this first embodiment of a divider according to the invention, a divider that can divide a pack of flat cartons into two stacks is provided, such that a stack of flat cartons of a desired size can be obtained. The stack is obtained by first placing a parting tip on the carton pack, such that the parting tip bears on the cartons in the pack. A parting device is also placed on the carton pack such that it bears on the cartons of the pack. The parting device will then divide the carton pack by displacing a front section from a rear section. The front section will move forwards and will in this way pull cartons forwards. The front section is provided with a first holding patch and the rear section is provided with a second holding patch. There is a distance between the first holding patch and the second holding patch, which will leave a number of flat-folded cartons between the flat-folded cartons held by the front section and the rear section when the front section and the rear section are separated. The distance between the first holding patch and the second holding patch corresponds to e.g. 10 to 20 flat-folded cartons. The distance between these cartons will increase when the front section and the rear section are separated, which means that the density of these flat-folded cartons will decrease. The reduced density at the parting plane will allow the parting tip to fall down between two flat-folded cartons.

The reduced density of flat-folded cartons at the parting plane will cause the distance between these cartons to enlarge, such that the parting tip can fall down between two cartons by gravity or by a light pressure from a spring force. This will define the first stack and the second stack. The front section will continue to pull cartons forwards some more, such that a well-defined gap is created between the stacks. The second stack will be held by the parting tip. The first stack contains the desired amount of cartons and is divided from the pack of cartons by the divider. The second stack comprises the remaining cartons of the pack of cartons.

The size of the created stack may be of any desired size, and may refer to either the length of the stack or the number of flat-folded cartons in the stack. However, the purpose of the invention is not to create stacks of flat-folded cartons or the like having exactly the same number of cartons, but to allow a pack of flat-folded cartons to be divided into a stack of flat-folded cartons in a reliable way, such that a well-defined stack can be picked up by e.g. a gripping device without a flat-folded carton being halfway between the stack and the remaining pack of cartons. The pack of cartons may be a pack having a predefined number of cartons or may be a continuous feed of flat-folded cartons. The created stack can be transported, moved or forwarded towards another work station.

In one development of the invention, the parting tip comprises a parting finger that is adapted to extend forwards from the parting tip, and thus from the parting plane. By separating the first stack from the second stack by the use of a parting finger, a more reliable and well-defined gap is created between the first and the second stack. This will simplify the pick-up of the first stack by a gripping device.

In one development of the invention, the divider comprises a support finger which is adapted to be inserted between the first stack and the second stack. The support finger may be inserted between the first stack and the second stack when the parting device has divided the carton pack, or may be inserted into the gap created by the parting finger. The support finger will support the created stack of flat-folded cartons. In this way, the parting device and the parting tip can be moved away from the carton pack before the first stack is pick-up by a gripping device, which will simplify the removal of the first stack.

In one development of the invention, the parting device comprises an upper part and a lower part, where the lower part comprises a front section and a rear section, where the upper part and the front section are interconnected with a first link arm and a second link arm arranged in parallel, and where the second link arm and the rear section are interconnected with a third link arm. The lower part is adapted to be placed on a carton pack that is to be divided. A lower bearing surface of the divider device will then bear on the cartons in the pack. When the parting device is lowered further, the front section will displace forwards and the rear section will remain stationary in the same position relative the parting plane. The front section will catch and pull some cartons forwards in this motion, while the rear section will be held in a stationary position. Part of the lower bearing surface is preferably provided with a friction material, such as rubber or the like, which will ensure that the cartons are held securely by the front section when the front section pulls the cartons forwards. The parting line between the front section and the rear section is preferably positioned somewhat behind the parting plane. In this way, it can be ensured that the parting tip will always be able to enter between two cartons when the front section pulls cartons forwards.

In one development, the divider is provided with a sensor that detects the position of the parting tip. In this way, it is possible to detect if the parting tip has entered between two cartons, or if the tip is stuck on a damaged carton. The parting tip could be caught on a damaged carton or between two cartons that are glued together, which will prevent the parting tip from entering between two cartons. It is also possible that the parting tip is caught directly on a single carton that is positioned somewhat oblique or that is warped. This is detected by the diverter system. In one example, the divider raises and lowers the parting device once more, such that a new try is made to divide the pack. If this try does not succeed, an error message may be given. It is also possible to give an error message right away. By detecting if the pack was divided successfully, it can be ensured that the gripping device will be able to grip a proper stack of cartons. If a gripping device tries to grip a stack that is not divided in a successful way, one or more cartons may be damaged.

In on example, the parting device is mounted on a second linear actuator adapted to move the parting device from an upper position above the carton pack to an intermediate position in which the parting device bears on the carton pack, and which is further adapted to move the parting device further down such that the front section of the parting device moves forwards. The parting tip is mounted on a first linear actuator adapted to move the parting tip from an upper position above the carton pack to a lower position in which the parting tip bears on the carton pack. By positioning the parting device and the parting tip well above the position of the pack, removal of a stack from the divider and feeding of a pack to the divider is simplified. A support finger may be mounted on a third linear actuator, which is adapted to move the support finger from an upper position above the carton pack to a lower position in which the support finger is positioned between the front and the rear stack of cartons.

The support finger may also be arranged on a fourth linear actuator, adapted to move the support finger and the third linear actuator forwards and backwards. The support finger is used to support the front part of the pack when it is moved forwards towards the position in which the pack can be divided. The pack is moved forwards until it bears on the stop members. The support finger is then retracted to its initial position.

In a method for dividing a pack of flat cartons, using a parting device and a parting tip, the steps of: moving the parting tip from an upper position above the carton pack to a lower position in which the parting tip bears on the cartons in a pack, moving the parting device from an upper position above the carton pack to an intermediate position in which the parting device bears on the carton pack, and parting the carton pack by moving a front section of the parting device forwards, while holding a rear section of the parting device in a stationary position, thereby reducing the density of the flat-folded cartons held between the front section and the rear section of the parting device, and allowing the parting tip to enter between a first stack and a second stack of carton blanks are comprised.

By the inventive method, a pack of flat cartons can be divided into two stacks of carton blanks in a reliable way. By first lowering a parting tip to bear on the pack of cartons, and then reducing the density of the cartons at the parting tip, the parting tip will be able to enter between two cartons when the cartons have been separated enough to allow for the tip to enter. The parting tip may enter between two cartons by gravity or by a light pressure from a spring. This will ensure that the two stacks are separated in a reliable way, and that there is no carton being caught between the stacks. If a tip would be inserted into the pack of cartons without separating the cartons beforehand, the risk for hitting an edge of a carton with the tip is relatively large. The carton will in this case be damaged, and may also corrupt one of the stacks.

The method may further comprise the step of creating a well-defined gap between the first stack and the second stack by extending a parting finger from the parting tip. A parting finger, or one parting finger on each side of the parting tip, is extended forwards, pushing the cartons away from the parting tip. This will create a well-defined gap between the two stacks, which will simplify the pick-up of the first stack by a gripping device. It is also possible to insert a support finger into the well-defined gap between the first stack and the second stack. With the support finger in place, the parting device and the parting tip can be removed, which may further simplify the pick-up of a stack of cartons.

### BRIEF DESCRIPTION OF DRAWINGS

The invention will be described in greater detail in the following, with reference to the embodiments that are shown in the attached drawings, in which
- Fig. 1: shows a view of a divider according to the invention in a raised position,
- Fig. 2: shows a detail of the divider according to the invention,
- Fig. 3: shows a view of a divider according to the invention with the parting tip in a lowered position,
- Fig. 4: shows a view of a divider according to the invention with the parting device in an intermediate position,
- Fig. 5: shows a detail of the divider according to the invention when a carton pack has been divided,
- Fig. 6: shows a divided pack with a well-defined gap,
- Fig. 7: shows the divider according to the invention with a lowered support finger,
- Fig. 8: shows a divider according to the invention with a support finger in a forward position, and

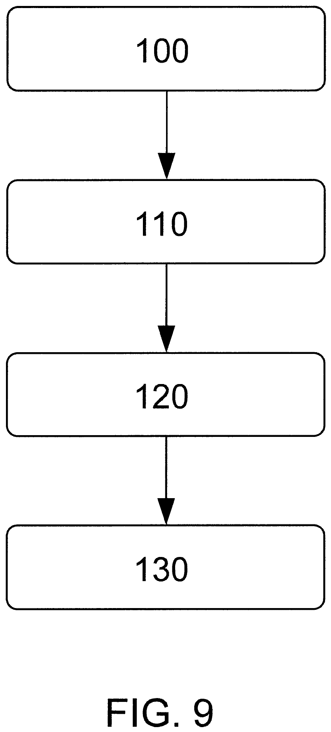

- Fig. 9: shows a flowchart of a method for dividing a pack of flat cartons according to the invention.

### MODES FOR CARRYING OUT THE INVENTION

The embodiments of the invention with further developments described in the following are to be regarded only as examples and are in no way to limit the scope of the protection provided by the patent claims. The use of directional specifications, such as front, rear, up, down, forwards, etc., refers to the orientation of the pack of cartons. The bearing plane for the pack of cartons is thus referred to as being horizontal.

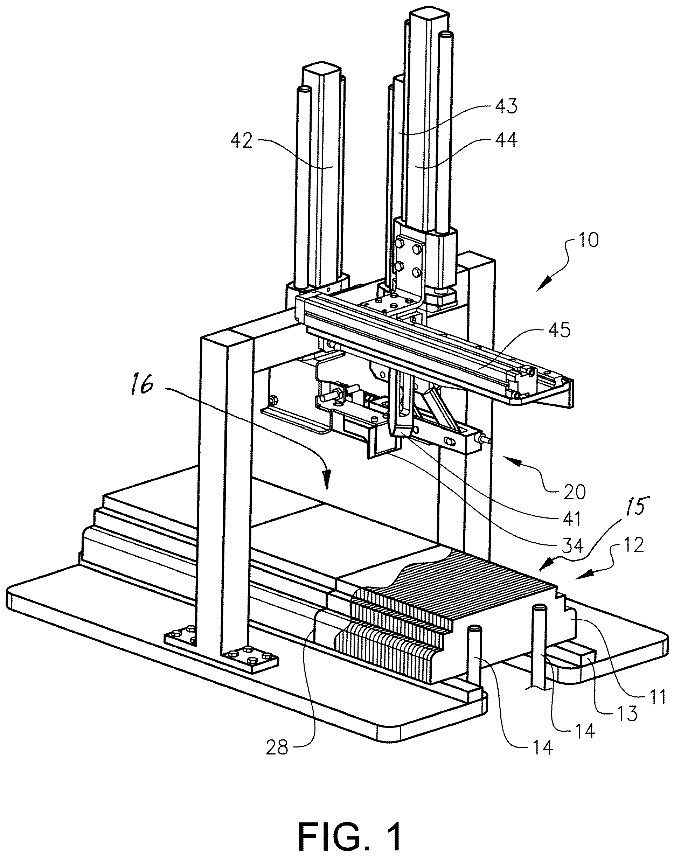

The divider 10 according to the invention comprises a parting device 20 and a parting tip 34. The divider is adapted for dividing a carton pack 12 of flat-folded cartons 11 which in the described example is arranged on a horizontal plane. The pack of cartons and the divider may however be inclined to a horizontal reference plane by up to +50 degrees or -50 degrees, depending on the desired pick-up position for the gripping device that is to pick up the created stack of folded cartons. This may simplify the handling of the cartons due to the gravity acting on the cartons. In the described example, the divider also comprises a support finger 41. Fig. 1 shows a perspective view of a divider 10 before the dividing of the carton pack has started. Here, the parting device 20, the parting tip 34 and the support finger 41 are positioned above the pack of cartons 12. The carton pack may either be a continuous feed or may be provided in a carrier. A carrier may comprise a pack of cartons corresponding e.g. to two to four carton stacks. The carton pack 12 is arranged on a carton plane 13 and is supported by stop members 14 at the front of the carton pack.

In the shown example, the parting device is mounted on a second linear actuator 43 adapted to move the parting device from an upper position above the carton pack to an intermediate position in which the parting device bears on the carton pack 12. The second linear actuator is further adapted to move the parting device further down such that the front section of the parting device will move forwards. The parting tip 34 is mounted on a first linear actuator 42 adapted to move the parting tip from an upper position above the carton pack to a lower position in which the parting tip bears on the carton pack. The support finger 41 is mounted on a third linear actuator 44, which is adapted to move the support finger from an upper position above the carton pack to a lower position in which the support finger is positioned between the first and the second stack of cartons. The support finger is also mounted on a fourth linear actuator 45, adapted to move the support finger forwards when it is in the lower position. The linear actuators may e.g. be air actuators or electrical actuators. A typical example of a carton pack may comprise 480 flat-folded cartons and is to be divided into three carton stacks, comprising approximately the same number of flat-folded cartons.

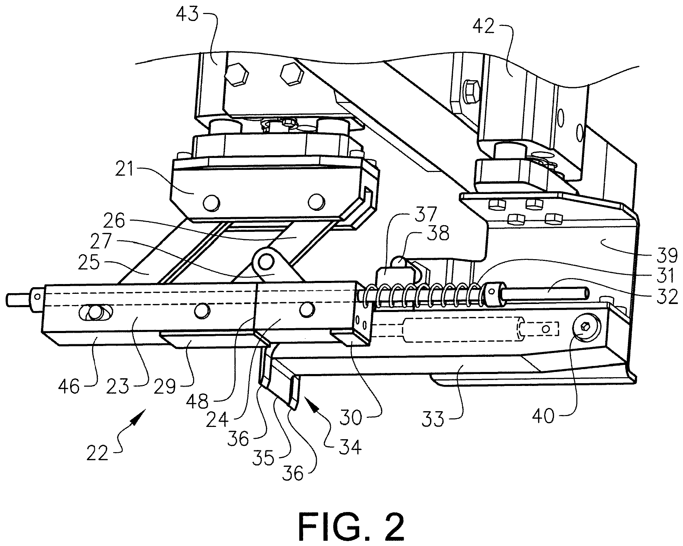

Fig. 2 shows a detail of the parting device 20 and a parting tip 34 of the divider 10. The parting device 20 comprises an upper part 21 and a lower part 22, where the lower part comprises a front section 23 and a rear section 24, where the upper part 21 and the front section 23 are interconnected with a first link arm 25 and a second link arm 26 arranged in parallel, and where the second link arm 26 and the rear section 24 are interconnected with a third link arm 27. The lower part 22 is adapted to bear on a carton pack that is to be divided. A lower bearing surface 46 of the parting device will then bear on the cartons in the pack. The front section and the rear section are pushed to each other by a spring 31, which is arranged on a rod 32. The rod 32 extends through both the front section and the rear section. The force of the spring, i.e. the extension of the spring, may be adjusted to a force suitable for the cartons that are to be divided.

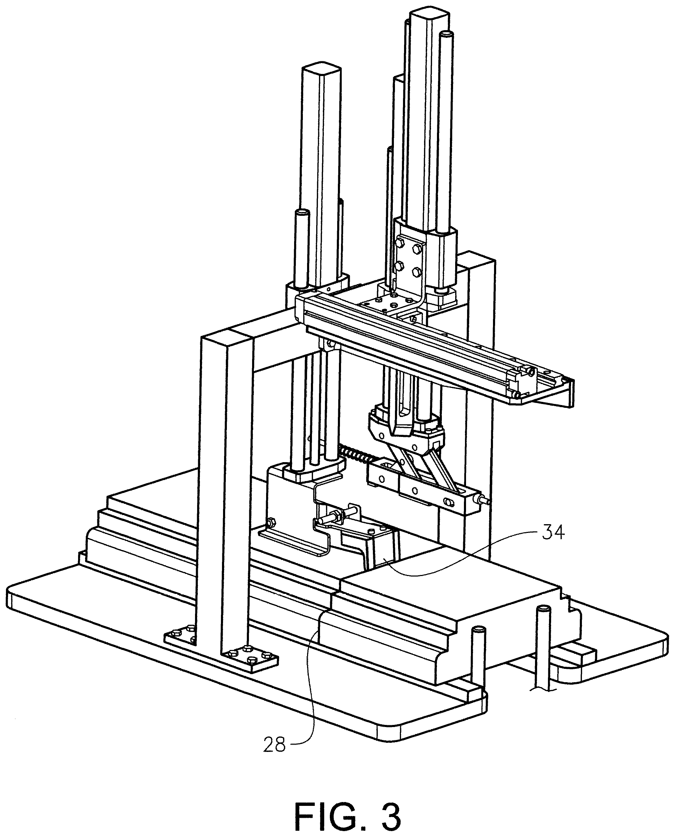

At least part of the bearing surface 46 is preferably provided with a friction material which will ensure that the front section will not glide on the cartons when the parting device is lowered further. Instead, the friction material will provide a good hold for the cartons. Here, the friction material is arranged as a first holding patch 29 on the front section and as a second holding patch 30 on the rear section. The pack of cartons will be divided along a parting plane 28, shown in Fig. 3. The parting tip 34 is arranged in the parting plane. The parting line 48 between the front section and the rear section is arranged somewhat behind the parting plane, to the rear of the parting plane.

There is a distance between the first holding patch 29 and the second holding patch 30, which will leave a number of flat-folded cartons between the flat-folded cartons held by the front section and the rear section when the front section and the rear section are parted. The distance between the first holding patch and the second holding patch corresponds to e.g. 10 to 20 flat-folded cartons. The distance between these cartons will increase when the front section and the rear section are parted, which means that the density of these flat-folded cartons will decrease. The reduced density at the parting plane will allow the parting tip 34 to fall down between two flat-folded cartons 11.

The parting tip 34 is arranged on a parting arm 33 suspended at a rear end at a pivot axle 40. The pivot axle is mounted to a bracket 39 which is mounted to the first linear actuator 42. The bracket is provided with a sensor 38 that is adapted to detect the position of the parting arm and thus the parting tip. The parting arm is thus provided with a detection plate 37. The position of the detection plate can be detected by the sensor. The sensor may e.g. be a magnetic sensor or an optical fork coupler or reflex coupler. The sensor detects when the arm and thus the tip is in a raised position. The parting edge 35 of the parting tip 34 is pointed with a relatively small radius, but is not sharp. The shown parting tip further comprises two parting fingers 36 arranged on both sides of the parting edge 35. The parting fingers can be extended forwards by the use of an actuator integrated in the parting arm. The parting tip and the parting fingers are relatively thin, and are preferably one or a few millimetres thick.

The dividing of a pack of cartons starts with the lowering of the parting tip 34. The bracket 39 also comprises a lower angled portion that can be used to bear on the carton pack. When the parting tip is lowered, the parting tip will land on the carton pack and will bear on the carton pack. Since the cartons are packed relatively tight with a relatively high density, and since the parting tip is pivotally suspended by the pivot axle, the parting tip will not be forced down on or between the packed cartons. Instead, the parting tip will bear on the carton pack with the weight of the parting arm and/or by a pressure from a spring. The first actuator continues down until the lower surface of the parting arm is close to the upper side of the carton pack. If a force feedback system is used, the first actuator stops when the angled portion touches the top of the carton pack. It is also possible to program the first actuator to stop when the angled portion is somewhat above the carton pack. It is also possible to stop the first actuator when the sensor detects the detection plate. The parting tip will now be in a raised position.

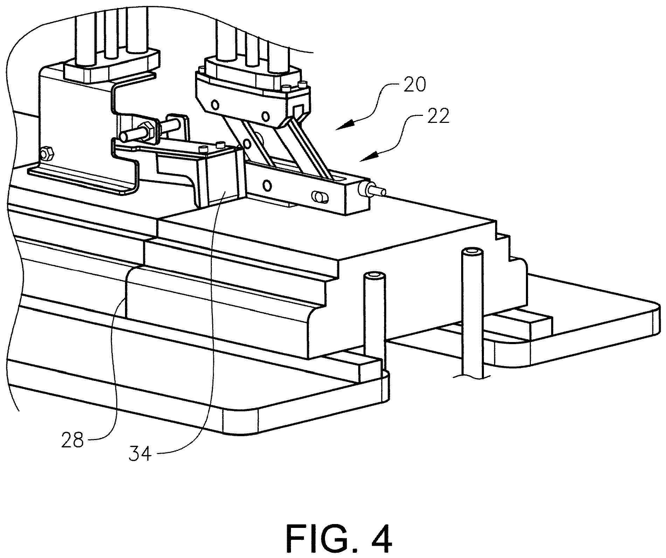

When the parting tip bears on the carton pack, as shown in Fig. 3, the parting device 20 is lowered by the second linear actuator 43. The parting device is first lowered to an intermediate position in which the lower bearing surface 46 of the parting device bears on the carton pack. This position is shown in Fig. 4. From this position, the second linear actuator continues downwards, which forces the upper part 21 of the parting device further down, towards the lower part 22 of the parting device. The movement downwards of the upper part will, due to the first link arm 25 and the second link arm 26, move the front section 23 forwards. The rear section 24 will, due to the second link arm 26 and the third link arm 27, remain stationary in its longitudinal position.

Since the lower bearing surface 46 of the lower part 22 bears on the upper sides of the cartons in the carton pack, the front section and the rear section will be forced apart. The friction material, i.e. the first holding patch 29 of the front part, will allow the front section to pull the cartons on which it bears in a forward direction when the front section moves forwards. The two link arms 25, 26 will continue to push the front section forwards until the upper part bears on the lower part, or until the second linear actuator has reached its lowermost position. The parting line 48 of the parting device is positioned somewhat behind the parting plane 28 of the divider, in a rearward direction. The distance between the parting plane 28 and the parting line 48 is in the range of millimetres, and is less than a centimetre. The distance preferably corresponds to the width of 2-4 flat-folded cartons. When the front section pulls the cartons forwards, the 2-4 rearmost cartons will be behind the parting plane, i.e. behind the parting tip, when the front section starts moving forwards. This will ensure that even if the parting tip is positioned directly on the edge of a carton, this edge will be moved away from the parting tip.

When the cartons are pulled forwards by the front section, the rearmost cartons will be pulled past the parting tip. In this process, the density between the cartons at the parting plane will decrease, and the distance between the cartons will enlarge, such that the parting tip can enter between two cartons. The parting tip may enter when all cartons have been pulled past the parting tip, or when one or more cartons remain behind the parting tip. In this case, the remaining cartons will slide against the first holding patch and will remain behind the parting tip when the front section continues forwards. It is ensured that the parting tip has entered between two cartons by detecting the position of the detection plate 37 by the sensor 38. If the detection plate is out of the detection range of the sensor, it is decided that the parting tip has entered between two cartons. If the sensor still detects the detection plate, which means that the parting tip has not entered between two cartons, an error signal can be issued or the parting action by the parting device can be repeated by raising and lowering the parting device one more time.

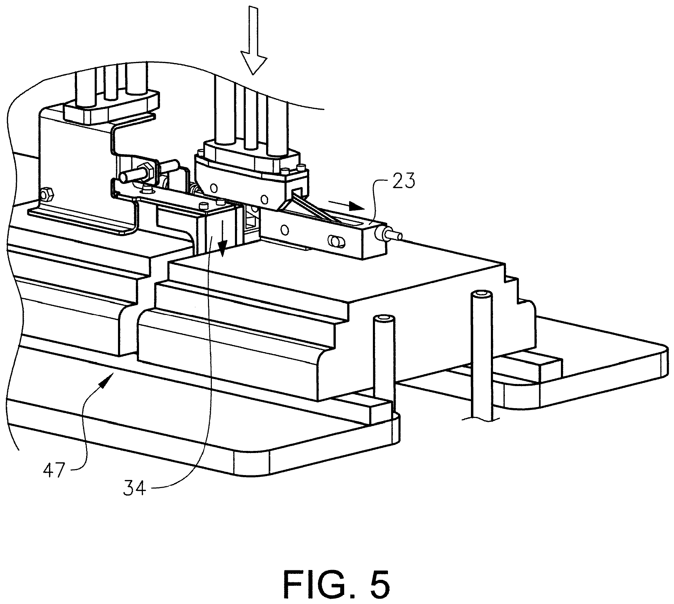

When the front section has reached its final position, a gap 47 has been created between the last carton of the first stack and the parting tip. The gap separates the first stack from the second stack. The first stack can now be picked up by a gripping device, or can be further handled in any desired way. This state is shown in Fig. 5.

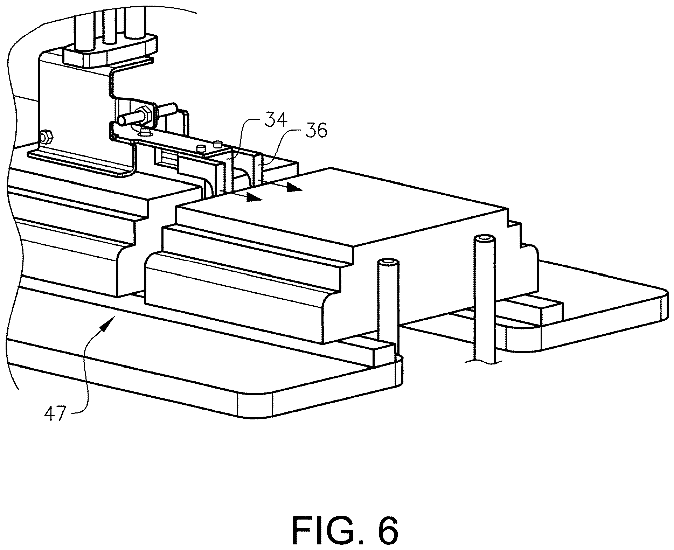

In order to provide a more well-defined gap and to simplify the pick-up of the stack by a gripping device, the gap can be enlarged. In the shown example, the parting finger is provided with two parting fingers 36. The parting fingers are arranged on each side of the parting tip 34 and are adapted to extend forwards from the parting tip, thereby compressing the first stack some in order to enlarge the gap. The parting fingers are in this example moved by a linear actuator integrated in the parting arm. By extending the parting fingers forwards, a well-defined gap is created. A parting arm with parting fingers extended from the parting tip is shown in Fig. 6. Preferably, the parting device is raised to its initial position such that it will not interfere with a gripping device before the parting fingers are extended from the parting tip. In this way, the parting device will no longer hold the first stack and the second stack of cartons, which will simplify enlargement of the gap by the parting fingers. When the gripping device is in a gripping position, holding the carton stack, the stop members 14 are lowered.

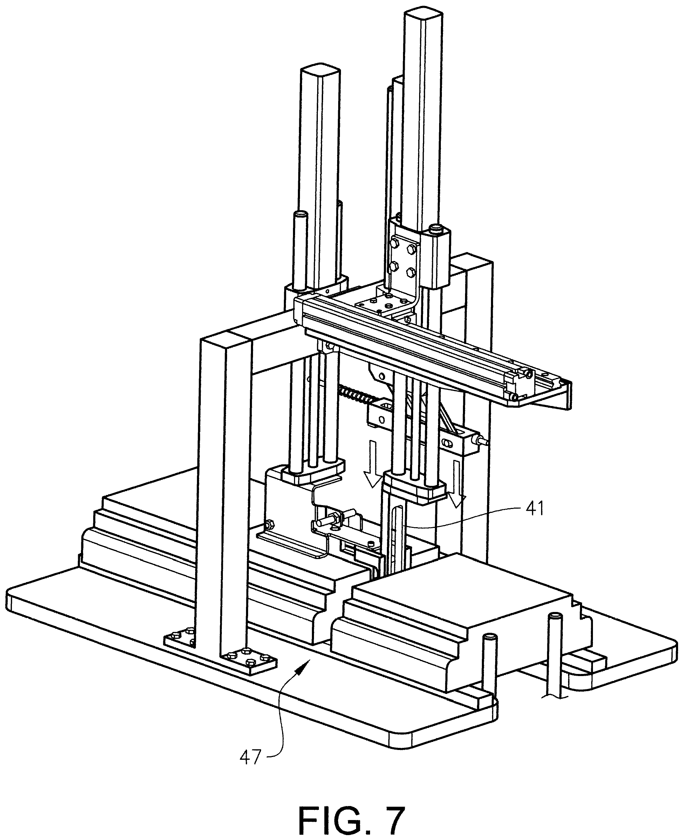

The shown divider is also provided with a support finger 41. The support finger is mounted on a third linear actuator 44. The support finger is lowered into the gap 47 by lowering the third linear actuator, as can be seen in Fig. 7. This can be done before or after the carton stack has been picked up. When the support finger has been lowered, and the parting tip and the parting fingers have been removed, it supports the rear of the first carton stack and the front of the second carton stack. With the support finger lowered, the parting fingers can be retracted and the parting tip can be raised to its initial position. It is also possible to lower the support finger into the created gap without using parting fingers. This use of parting fingers and/or a support finger may e.g. depend on the design of the gripping device. Lowering the support finger in the gap created by the parting tip and the parting fingers will also prevent damage of the surfaces of the cartons.

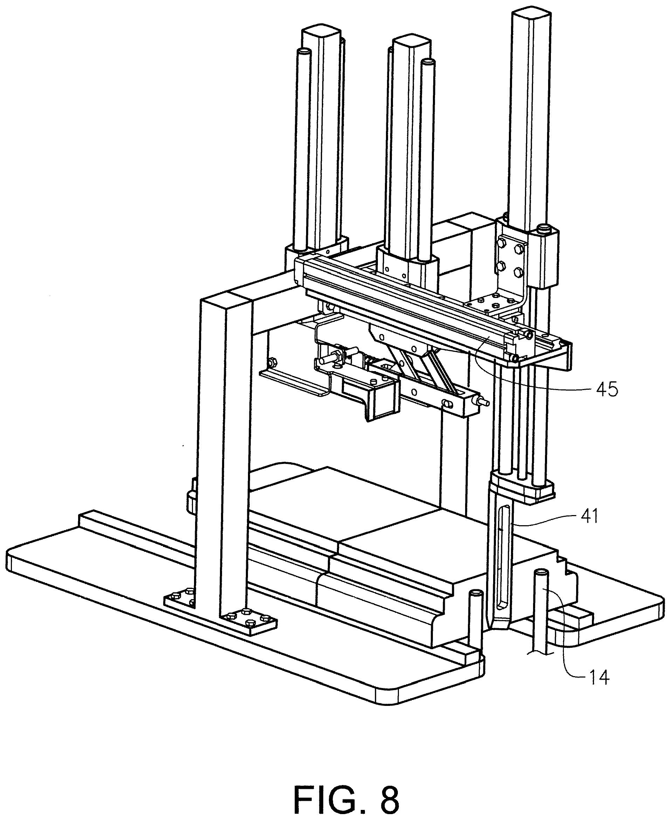

When the first carton stack has been picked up, the divider will be prepared for dividing a new carton stack. In the shown example, the carton feed of the carton pack is from the rear of the divider. The support finger and the third linear actuator are mounted on a fourth linear actuator, which is adapted to move the support finger forwards. The carton pack is moved forwards towards the stop members, which will support the front of the first carton stack. The support finger is moved forwards as the cartons are fed forwards, supporting the carton pack until it abuts the stop members, as is shown in Fig. 8. From here, the support finger is raised and retracted to its initial position, and the divider is ready to divide a new stack of cartons from the pack of cartons.

In the inventive method for dividing a pack of flat-folded cartons, the pack is divided by using a parting device and a parting tip. In step 100, the parting tip is moved from an upper position above the carton pack to a lower position in which the parting tip bears on the carton pack. The parting tip lies on top of the edges of the cartons, and since the cartons are packed relatively tight, there is no room for the parting tip to enter between any cartons. The parting tip is arranged to enter between two cartons by gravity or by the force of a spring.

In step 110, the parting device is moved from an upper position above the carton pack to an intermediate position in which the parting device bears on the carton pack. The upper part of the parting device continues downwards, while the lower part bears on the carton pack.

In step 120, the carton pack is divided into a first stack and a second stack by moving a front section of the parting device forwards, while holding a rear section in a fixed position. The forward movement of the front section is achieved in that the upper part and the front section are interconnected by two parallel link arms, which causes the front section to perform a horizontal movement in the forward direction. The parting of the front section from the rear section will decrease the density of the flat-folded cartons held between the front section and the rear section of the parting device. The reduced density, i.e. the increased distance between the flat-folded cartons, will allows the parting tip to enter between two flat-folded cartons.

In step 130, the parting tip is lowered to a position between a first stack and a second stack of carton blanks. The parting tip enters between two cartons when the carton pack is divided, which will define the first stack and the second stack. The parting tip can fall down by gravity or by the force from a spring when there is enough room between two cartons. In this way, the cartons will not be damaged by forcing the parting tip in between the cartons.

The divider and the method for dividing a pack of flat-folded cartons can be used in any packing plant or other facility where such a divider or method can be used for dividing packs of flat-folded cartons. The divider, arrangement or method may also be used with larger flat-folded cartons such as e.g. folded cardboard boxes, or plastic boxes.

The invention is not to be regarded as being limited to the embodiments described above, a number of additional variants and modifications being possible within the scope of the subsequent patent claims.

### REFERENCE SIGNS

- 10:: Divider
- 11:: Flat-folded carton
- 12:: Pack of flat-folded cartons
- 13:: Carton plane
- 14:: Stop member
- 15:: First stack of flat cartons
- 16:: Second stack of flat cartons
- 20:: Parting device
- 21:: Upper part
- 22:: Lower part
- 23:: Front section
- 24:: Rear section
- 25:: First link arm
- 26:: Second link arm
- 27:: Third link arm
- 28:: Parting plane
- 29:: First holding patch
- 30:: Second holding patch
- 31:: Spring
- 32:: Rod
- 33:: Parting arm
- 34:: Parting tip
- 35:: Parting edge
- 36:: Parting finger
- 37:: Detection plate
- 38:: Sensor
- 39:: Bracket
- 40:: Pivot axle
- 41:: Support finger
- 42:: First linear actuator
- 43:: Second linear actuator
- 44:: Third linear actuator
- 45:: Fourth linear actuator
- 46:: Lower bearing surface
- 47:: Gap
- 48:: Parting line

## Claims

1. A divider (10) for dividing a pack (12) of flat-folded cartons (11) into a first stack (15) and a second stack (16) of flat-folded cartons (11), where the divider (10) comprises a parting device (20) and a parting tip (34), where the parting tip (34) is arranged in a parting plane (28), **characterized in that** the parting tip (34) is adapted to bear on top of the carton pack (12) before the carton pack (12) is divided and to hold the second stack (16) when the carton pack has been divided, that the parting device (20) is adapted to divide the carton pack (12) along the parting plane (28) by displacing a front section (23) of the parting device (20) from a rear section (24) of the parting device (20), such that the density of the flat-folded cartons (11) held between the front section (23) and the rear section (24) of the parting device (20) will decrease, which allows the parting tip (34) to enter between to flat-folded cartons (11), such that the first stack (15) is held by the front section (23) and that the second stack (16) is held by the parting tip (34).

2. Divider according to claim 1, **characterized in that** the front section (23) is displaced forwards and that the rear section (24) is stationary when the carton pack is divided.

3. Divider according to claim 1 or 2, **characterized in that** the parting tip (34) comprises a parting finger (36) adapted to extend forwards from the parting tip (34) such that a well-defined gap (47) is created between the first stack (15) and the second stack (16).

4. Divider according to any of the preceding claims, **characterized in that** the parting tip (34) is arranged at a front end of a parting arm (33), where the parting arm is pivotally suspended at a pivot axle (40) at a rear end of the parting arm.

5. Divider according to any of the preceding claims, **characterized in that** the parting tip (34) is arranged to enter between two flat-folded cartons (11) when the front section (23) is moved forwards.

6. Divider according to any of the preceding claims, **characterized in that** the parting device (20) comprises an upper part (21) and a lower part (22), where the lower part comprises the front section (23) and the rear section (24), where the upper part (21) and the front section (23) are interconnected with a first link arm (25) and a second link arm (26) arranged in parallel, and where the second link arm (26) and the rear section (24) are interconnected with a third link arm (27).

7. Divider according to any of the preceding claims, **characterized in that** the parting tip (34) is mounted on a first linear actuator (42) adapted to move the parting tip (34) from an upper position above the carton stack (12) to a lower position in which the parting tip (34) bears on the carton stack (12).

8. Divider according to claim 7, **characterized in that** the parting device (20) is mounted on a second linear actuator (43) adapted to move the parting device (20) from an upper position above the carton stack (12) to an intermediate position in which the parting device (20) bears on the carton stack (12), and further to a lower position in which the front section (23) of the parting device (20) is positioned apart from the rear section (24) of the parting device (20).

9. Divider according to any of the preceding claims, **characterized in that** the divider comprises a support finger (41) adapted to be inserted between the first stack (15) and the second stack (16).

10. Divider according to claim 9, **characterized in that** the support finger (41) is mounted on a third linear actuator (44) adapted to move the support finger (41) from an upper position above the carton stack (12) to a lower position in which the support finger (34) is inserted between the first stack (15) and the second stack (16).

11. Method for dividing a pack (12) of flat-folded cartons (11), using a parting device (20) and a parting tip (34), comprising the steps of:
- moving the parting tip (34) from an upper position above the carton stack (12) to a lower position in which the parting tip (34) bears on the carton stack (12),
- moving the parting device (20) from an upper position above the carton stack (12) to an intermediate position in which the parting device (20) bears on the carton stack (12),
- dividing the carton stack by moving an upper part of the parting device (20) further down, such that a front section of the parting device (20) moves forwards, and that a rear section (24) of the parting device (20) is stationary, thereby decreasing the density of the flat-folded cartons (11) held between the front section and the rear section of the parting device,
- allowing the parting tip to enter between a first stack and a second stack of flat-folded cartons.

12. Method according to claim 11, comprising the additional step of:
creating a well-defined gap (47) between the first stack and the second stack by extending a parting finger (36) from the parting tip (34).

13. Method according to claim 12, comprising the additional step of:
lowering a support finger (41) into the well-defined gap (47) between the first stack and the second stack.

## Patentansprüche

1. Teiler (10) zum Teilen eines Haufens (12) von flach gefalteten Kartons (11) in einen ersten Stapel (15) und einen zweiten Stapel (16) von flach gefalteten Kartons (11), wo der Teiler (10) eine Trennungsvorrichtung (20) und eine Trennungsspitze (34) umfasst, wo die Trennungsspitze (34) in einer Trennungsebene (28) angeordnet ist, **dadurch gekennzeichnet, dass** die Trennungsspitze (34) zum Stützen oben auf dem Kartonhaufen (12) vor der Trennung des Kartonhaufens (12) und zum Halten des zweiten Stapels (16), wenn der Kartonhaufen getrennt worden ist, eingerichtet ist, dass die Trennungsvorrichtung (20) zum Trennen des Kartonhaufens (12) entlang der Trennungsebene (28) eingerichtet ist durch Verlagern eines Vorderabschnitts (23) der Trennungsvorrichtung (20) von einem Hinterabschnitt (24) der Trennungsvorrichtung (20), so dass die Dichte der flach gefalteten Kartons (11), die zwischen dem Vorderabschnitt (23) und dem Hinterabschnitt (24) der Trennungsvorrichtung (20) gehalten werden, verringert wird, was ermöglicht, dass die Trennungsspitze (34) zwischen die flach gefalteten Kartons (11) eindringt, so dass der erste Stapel (15) durch den Vorderabschnitt (23) gehalten wird und dass der zweite Stapel (16) durch die Trennungsspitze (34) gehalten wird.

2. Teiler nach Anspruch 1, **dadurch gekennzeichnet, dass** der Vorderabschnitt (23) nach vorne verlagert wird, und dass der Hinterabschnitt (24) ortsfest ist, wenn der Kartonhaufen geteilt wird.

3. Teiler nach Anspruch 1 oder 2, **dadurch gekennzeichnet, dass** die Trennungsspitze (34) einen Trennungsfinger (36) umfasst, der dafür eingerichtet ist, sich nach vorne von der Trennungsspitze (34) zu erstrecken, so dass ein eindeutig definierter Zwischenraum (47) zwischen dem ersten Stapel (15) und dem zweiten Stapel (16) hergestellt wird.

4. Teiler nach einem der vorgehenden Ansprüche, **dadurch gekennzeichnet, dass** die Trennungsspitze (34) an einem Vorderende eines Trennungsarms (33) angeordnet ist, wobei der Trennungsarm in einer Drehachse (40) an einem Hinterende des Trennungsarms drehbar aufgehängt ist.

5. Teiler nach einem der vorgehenden Ansprüche, **dadurch gekennzeichnet, dass** die Trennungsspitze (34) zum Eindringen zwischen zwei flach gefalteten Kartons (11) eingerichtet ist, wenn der Vorderabschnitt (23) nach vorne bewegt wird.

6. Teiler nach einem der vorgehenden Ansprüche, **dadurch gekennzeichnet, dass** die Trennungsvorrichtung (20) einen oberen Teil (21) und einen unteren Teil (22) aufweist, wobei der untere Teil den Vorderabschnitt (23) und den Hinterabschnitt (24) umfasst, wobei der obere Teil (21) und der Vorderabschnitt (23) durch einen ersten Verknüpfungsarm (25) und einen zweiten Verknüpfungsarm (26), die parallel angeordnet sind, miteinander verbunden sind, und wobei der zweite Verknüpfungsarm (26) und der Hinterabschnitt (24) durch einen dritten Verknüpfungsarm (27) miteinander verbunden sind.

7. Teiler nach einem der vorgehenden Ansprüche, **dadurch gekennzeichnet, dass** die Trennungsspitze (34) auf einem ersten linearen Aktor (42) montiert ist, der zum Bewegen der Trennungsspitze (34) von einer oberen Position oberhalb des Kartonhaufens (12) in eine untere Position, worin die Trennungsspitze (34) auf dem Kartonhaufen (12) stützt, eingerichtet ist.

8. Teiler nach Anspruch 7, **dadurch gekennzeichnet, dass** die Trennungsvorrichtung (20) auf einem zweiten linearen Aktor (43) montiert ist, der zum Bewegen der Trennungsvorrichtung (20) von einer oberen Position oberhalb des Kartonhaufens (12) in eine zwischenliegende Position, worin die Trennungsvorrichtung (20) auf dem Kartonhaufen (12) stützt, und weiter in eine untere Position, worin der Vorderabschnitt (23) der Trennungsvorrichtung (20) entfernt vom Hinterabschnitt (24) der Trennungsvorrichtung (20) positioniert ist, eingerichtet ist.

9. Teiler nach einem der vorgehenden Ansprüche, **dadurch gekennzeichnet, dass** der Teiler einen Unterstützungsfinger (41) aufweist, der zum Einführen zwischen den ersten Stapel (15) und den zweiten Stapel (16) eingerichtet ist.

10. Teiler nach Anspruch 9, **dadurch gekennzeichnet, dass** der Unterstützungsfinger (41) auf einem dritten linearen Aktor (44) montiert ist, der zum Bewegen des Unterstützungsfingers (41) von einer oberen Position oberhalb des Kartonhaufens (12) in eine untere Position, worin der Unterstützungsfinger (34) zwischen den ersten Stapel (15) und den zweiten Stapel (16) eingeführt ist, eingerichtet ist.

11. Verfahren zum Trennen eines Haufens (12) von flach gefalteten Kartons (11), unter Verwendung einer Trennungsvorrichtung (20) und einer Trennungsspitze (34), umfassend die folgenden Schritte:
- Bewegen der Trennungsspitze (34) von einer oberen Position oberhalb des Kartonhaufens (12) in eine untere Position, worin die Trennungsspitze (34) auf dem Kartonhaufen (12) stützt,
- Bewegen der Trennungsvorrichtung (20) von einer oberen Position oberhalb des Kartonhaufens (12) in eine zwischenliegende Position, worin die Trennungsvorrichtung (20) auf dem Kartonhaufen (12) stützt,
- Trennen des Kartonhaufens durch Bewegen eines oberen Teils der Trennungsvorrichtung (20) weiter nach unten, so dass ein Vorderabschnitt der Trennungsvorrichtung (20) sich nach vorne bewegt, und dass ein Hinterabschnitt (24) der Trennungsvorrichtung (20) ortsfest ist, wodurch die Dichte der flach gefalteten Kartons (11), die zwischen dem Vorderabschnitt und dem Hinterabschnitt der Trennungsvorrichtung gehalten werden, verringert wird,
- Ermöglichen, dass die Trennungsspitze zwischen einen ersten Stapel und einen zweiten Stapel von flach gefalteten Kartons eindringt.

12. Verfahren nach Anspruch 11, umfassend des zusätzlichen Schritts zum:
Herstellen eines eindeutig definierten Zwischenraums (47) zwischen dem ersten Stapel und dem zweiten Stapel durch die Verlängerung eines Trennungsfingers (36) von der Trennungsspitze (34).

13. Verfahren nach Anspruch 12, umfassend des zusätzlichen Schritts zum:
Senken eines Unterstützungsfingers (41) in den eindeutig definierten Zwischenraum (47) zwischen dem ersten Stapel und dem zweiten Stapel.

## Revendications

1. Séparateur (10) pour diviser un paquet (12) de cartons pliés à plat (11) dans un premier empilement (15) et un deuxième empilement (16) de cartons pliés à plat (11), le séparateur (10) comprenant un dispositif de séparation (20) et une pointe de séparation (34), la pointe de séparation (34) étant disposée dans un plan de séparation (28), **caractérisé en ce que** la pointe de séparation (34) est adaptée pour venir en appui sur le dessus du paquet de cartons (12) avant que le paquet de cartons (12) ne soit divisé et pour maintenir le deuxième empilement (16) lorsque le paquet de cartons a été divisé, que le dispositif de séparation (20) est adapté pour diviser le paquet de cartons (12) le long du plan de séparation (28) en déplaçant une section avant (23) du dispositif de séparation (20) depuis une section arrière (24) du dispositif de séparation (20), si bien que la densité des cartons pliés à plat (11) maintenus entre la section avant (23) et la section arrière (24) du dispositif de séparation (20) va diminuer, ce qui permet à la pointe de séparation (34) d'entrer entre des cartons pliés à plat (11), si bien que le premier empilement (15) est maintenu par la section avant (23) et que le deuxième empilement (16) est maintenu par la pointe de séparation (34).

2. Séparateur selon la revendication 1, **caractérisé en ce que** la section avant (23) est déplacée vers l'avant, et **en ce que** la section arrière (24) est fixe lorsque e paquet de cartons est divisé.

3. Séparateur selon la revendication 1 ou 2, **caractérisé en ce que** la pointe de séparation (34) comprend un doigt de séparation (36) adapté pour s'étendre vers l'avant à partir de la pointe de séparation (34) si bien qu'un espace bien défini (47) est créé entre le premier empilement (15) et le deuxième empilement (16).

4. Séparateur selon l'une quelconque des revendications précédentes, **caractérisé en ce que** la pointe de séparation (34) est disposée à une extrémité avant d'un bras de séparation (33), le bras de séparation étant suspendu de manière pivotante au niveau d'un axe de pivot (40) à une extrémité arrière du bras de séparation.

5. Séparateur selon l'une quelconque des revendications précédentes, **caractérisé en ce que** la pointe de séparation (34) est agencée pour entrer entre deux cartons pliés à plat (11) lorsque la section avant (23) est déplacée vers l'avant.

6. Séparateur selon l'une quelconque des revendications précédentes, **caractérisé en ce que** le dispositif de séparation (20) comprend une partie supérieure (21) et une partie inférieure (22), la partie inférieure comprenant la section avant (23) et la section arrière (24), la partie supérieure (21) et la section avant (23) étant interconnectées avec un premier bras de liaison (25) et un deuxième bras de liaison (26) disposés en parallèle, et le deuxième bras de liaison (26) et l'arrière section (24) étant interconnectés avec un troisième bras de liaison (27).

7. Séparateur selon l'une quelconque des revendications précédentes, **caractérisé en ce que** la pointe de séparation (34) est montée sur un premier actionneur linéaire (42) adapté pour déplacer la pointe de séparation (34) à partir d'une position supérieure au-dessus de l'empilement de cartons (12) vers une position inférieure dans laquelle la pointe de séparation (34) prend appui sur l'empilement de cartons (12).

8. Séparateur selon la revendication 7, **caractérisé en ce que** le dispositif de séparation (20) est monté sur un deuxième actionneur linéaire (43) adapté pour déplacer le dispositif de séparation (20) à partir d'une position supérieure au-dessus de l'empilement de cartons (12) vers une position intermédiaire dans laquelle le dispositif de séparation (20) prend appui sur la l'empilement de cartons (12), et davantage à une position inférieure dans laquelle la section avant (23) du dispositif de séparation (20) est positionnée à l'écart de la section arrière (24) du dispositif de séparation (20).

9. Séparateur selon l'une quelconque des revendications précédentes, **caractérisé en ce que** le séparateur comprend un doigt d'appui (41) adapté de manière à être inséré entre le premier empilement (15) et le deuxième empilement (16).

10. Séparateur selon la revendication 9, **caractérisé en ce que** le doigt d'appui (41) est monté sur un troisième actionneur linéaire (44) adapté pour déplacer le doigt d'appui (41) à partir d'une position supérieure au-dessus de l'empilement de cartons (12) vers une position inférieure dans laquelle le doigt d'appui (34) est inséré entre le premier empilement (15) et le deuxième empilement (16).

11. Procédé de division d'un paquet (12) de cartons pliés à plat (11), à l'aide d'un dispositif de séparation (20) et d'une pointe de séparation (34), comprenant les étapes consistant à :
- déplacer la pointe de séparation (34) à partir d'une position supérieure au-dessus de l'empilement de cartons (12) vers une position inférieure dans laquelle la pointe de séparation (34) prend appui sur l'empilement de cartons (12),
- déplacer le dispositif de séparation (20) à partir d'une position supérieure au-dessus de l'empilement de cartons (12) vers une position intermédiaire dans laquelle le dispositif de séparation (20) prend appui sur l'empilement de cartons (12),
- diviser l'empilement de cartons en déplaçant une partie supérieure du dispositif de séparation (20) plus bas, si bien qu'une section avant du dispositif de séparation (20) se déplace vers l'avant, et qu'une section arrière (24) du dispositif de séparation (20) est fixe, diminuant ainsi la densité des cartons pliés à plat (11) maintenus entre la section avant et la section arrière du dispositif de séparation,
- permettre à la pointe de séparation d'entrer entre un premier empilement et un deuxième empilement de cartons pliés à plat.

12. Procédé selon la revendication 11, comprenant l'étape supplémentaire de : la création d'un espace bien défini (47) entre le premier empilement et le deuxième empilement en étendant un doigt de séparation (36) depuis la pointe de séparation (34).

13. Procédé selon la revendication 12, comprenant l'étape supplémentaire consistant à : abaisser un doigt d'appui (41) dans l'espace bien défini (47) entre le premier empilement et le deuxième empilement.
